(19) Europäisches Patentamt
European Patent Office
Office européen des brevets

(11) EP 0 638 592 B1

(12) EUROPEAN PATENT SPECIFICATION

(45) Date of publication and mention of the grant of the patent:
**10.12.1997 Bulletin 1997/50**

(51) Int. Cl.[6]: **C08F 2/32**, C02F 1/54

(21) Application number: **94112666.6**

(22) Date of filing: **12.08.1994**

# (54) Method of preparing water-in-oil polymer microemulsions and use of the polymers

Verfahren zur Herstellung von Wasser-in-Öl polymer Mikroemulsionen und deren Verwendung

Procédé de préparation de microémulsions polymères eau-dans-l'huile et leur usage

(84) Designated Contracting States:
**AT BE CH DE DK ES FR GB GR IE IT LI LU MC NL PT SE**

(30) Priority: **12.08.1993 US 105266**
**17.08.1993 US 106955**

(43) Date of publication of application:
**15.02.1995 Bulletin 1995/07**

(73) Proprietor:
**CYTEC TECHNOLOGY CORP.**
**West Paterson New Jersey 07424 (US)**

(72) Inventors:
- **Dauplaise, David L.**
  **Stamford, Connecticut 06903 (US)**
- **O'Toole, Michael P.**
  **Norwalk, Connecticut 06854 (US)**

(74) Representative:
**Allam, Peter Clerk et al**
**LLOYD WISE, TREGEAR & CO.,**
**Commonwealth House,**
**1-19 New Oxford Street**
**London WC1A 1LW (GB)**

(56) References cited:
**EP-A- 0 130 632**
**WO-A-89/04844**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 638 592 B1

## Description

The present invention relates to a method for preparing water-in-oil polymer microemulsions.

Polymer-containing microemulsions are known to those skilled in the art. They are stable, transparent water-in-oil systems that are stabilized by surfactants. Water soluble polymers such as polyacrylamide are effective in papermaking to improve drainage, formation and retention. Fast drainage and greater retention of fines contribute to lower cost. In addition, they are useful in the flocculation of suspended solids, such as sewage sludge and in the thickening of cellulosic paper pulp suspensions. The increasing cost of materials has made it highly desirable to produce flocculating agents which produce higher separation at lower dose levels. Finally, they are used in enhanced oil recovery processes as drive fluids to push through underground oil reservoirs.

Polymerization of monomers in emulsions is well known to those skilled in the art. Polymers produced by these techniques have found widespread industrial application. Further, some of the techniques described in the prior art disclose a variety of multi-stage addition techniques for use in emulsion polymerization methods. Typically, the prior art emulsion disclosures teach adding the second stage as an emulsion and have high aqueous content or no oil.

The Rohm and Haas product literature entitled "Emulsion Polymerization of Acrylic Monomers" pp. 7, 14-18, teaches multi-stage emulsion polymerization of ethyl acrylate to achieve higher solids (43-46%), and to control heat. However, the reference discloses polymerization in an aqueous emulsion with the later steps comprising further addition of the aqueous emulsion.

Naidus, "Emulsion Polymers for Paints," Industrial and Engineering Chemistry, v. 45, n. 4 (1953), discusses adding monomer, or monomer in an aqueous emulsion, continuously during polymerization to provide a homogeneous composition. The author teaches that the monomer addition technique gives emulsions of smaller aqueous droplet size because of a larger emulsifier to monomer ratio; and that the monomer emulsion addition technique is more stable with less coagulum since adequate emulsification is not dependent upon the agitation.

Taft, United States Patent No. 3,297,621, teaches a two-step emulsion polymerization process to control heat wherein the first step comprises adding non-emulsified monomer to a reactor containing catalyst and an emulsifying solution and the second step comprises adding an aqueous emulsion of monomer to the reactor.

Morgan, "Multifeed Emulsion Polymers," J. Appl. Polymer Sci., v. 27, 2033-42 (1982) teaches a two stage emulsion to form core/shell concept macroemulsions. The author teaches a first step of continuously adding monomer to surfactant and water; and a second step of adding monomer as a water-in-oil emulsion to minimize destabilization of the seed polymer. The changing of the feed from monomer to water-in-oil emulsion may cause HLB problems.

Robinson et al., United States Patent No. 5,110,864, teach a cationic monomer delayed addition process to produce a polymer having improved retention properties vis-a-vis a polymer produced in a comparable one-step process. The disclosed monomers are cationic although acrylamide and acrylic acid are mentioned as comonomers. The patentees teach adding a portion of the monomer containing aqueous phase to the oil phase, emulsifying, adding the remaining portion of the aqueous phase without polymerization, and then polymerizing.

Also known in the art is the use of a variety of one-step inverse microemulsion polymerization techniques. The mechanism and reaction kinetics in inverse microemulsions are different than those observed in inverse emulsions. The formation of microemulsions is considerably more complex than the formation of inverse emulsions. Inverse emulsions contain 1-10 μm droplets and size grows continuously. The microemulsion polymerization techniques of the prior art are either one-step processes or add the second portion as an emulsion and require a relatively high surfactant and oil content and which in some cases disclose a transparent monomer microemulsion.

Candau et al., United States Patent No. 4,521,317, teach a process for polymerizing a water soluble monomer in a water-in-oil inverse microemulsion. The patentees teach that the monomer emulsion is transparent, and that the aqueous phase comprises 1-50 percent by weight of the total.

Durand et al., United States Patent No. 4,681,912, teach a process to manufacture inverse microlatices of water soluble copolymers by admixing an aqueous phase containing water soluble monomer and an oil phase with non-ionic surfactant(s) having an HLB range of 8-11 to form a transparent monomer microemulsion and polymerizing. The minimum surfactant concentration is determined according to the formula: $y = 5.8x^2 - 110x + 534$ where x = HLB value and y = surfactant concentration.

Holtzscherer et al., "Application of the Cohesive Energy Ratio Concept (CER) to the Formation of Polymerizable Microemulsions," Colloids and Surfaces 29, (1988), discuss the use of the cohesive energy concept to determine the most efficient use of surfactants in microemulsions. The minimum surfactant content found was 10.8 percent and an optimum HLB of 8.68. Monomer content was 14-22.5 weight percent.

Dauplaise et al., United States Patent No. 4,954,538, teach crosslinked glyoxylated (meth)acrylamides prepared using inverse microemulsion techniques and are disclosed to be useful as wet- and dry- strength agents in paper production.

Honig et al., EP 0 462 365, teach the use of ionic organic microemulsions to provide improved products useful in drainage and retention in papermaking.

Holtzscherer et al., "Modification of Polyacrylamide Microlatices by Using a Seeding Procedure," and Holtzscherer

et al., K. L. Mittal and P. Bothorel, eds, Surfactants in Solution, in press, teach a seeding procedure applied to inverse acrylamide microlatices to increase polymer content. Higher solid contents are desirable in most industrial applications. However, the acrylamide is precipitated after the first step. The polymer content is 2.02 - 4.38 weight percent after the first step and 8.22 - 10.29 weight percent at final. In addition, the oil phase is 88-92 weight percent.

While the prior art microemulsion processes have provided some improvements in the performance of the polymeric products, there still exists a need in the art for further improvements in performance. Further, the amounts of oil and emulsifier employed in the prior art processes are relatively high, thereby making the products more costly.

According to the present invention, there is provided a method for preparing a cross-linked or non-cross-linked, polymeric microemulsion, the method comprising (i) preparing an oil phase comprising at least one hydrocarbon liquid and an effective amount of a surfactant or mixture of surfactants; (ii) preparing an aqueous phase comprising at least one monomer which can be cationic, anionic or non-ionic, and optionally at least one cross-linking agent; and (iii) adding the aqueous phase in at least two portions to the oil phase and then effecting polymerization after the addition of each portion.

By means of the present invention there can be obtained anionic, cationic or non-ionic polymer microemulsions having high solid levels and/or small sized aqueous phase droplets.

When it is desired that higher solids levels are the goal, the monomer must comprise at least 27 percent, by weight, of the total aqueous phase and oil phase.

When smaller aqueous polymer phase droplets is the goal, the microemulsion should have a polymer solids content of less than 25% and an emulsifier-to-monomer ratio of less than 0.4.

The multistep microemulsions obtainable by the present invention especially have superior performance as retention aids, for use in sludge dewatering and as oil recovery drive fluids as compared to products produced from one-step microemulsions of the prior art. The high surfactant and oil content of the prior art emulsions can also have a harmful effect on papermachines, i.e. adversely effects sizing and/or creates foam.

Preferably, the polymer phase droplets present as the aqueous phase have a number average size diameter of less than 750 nm, preferably less than 300 nm, and a solution viscosity at least 1.1 mPa.s, preferably from 1.5 to 4.0 mPa.s. The anionic systems, when used as flocculants, preferably have solution viscosities ranging from 3.0 to 7.0, cationic systems preferably from 1.8 to 4.5 and non-ionic systems preferably from 2.0 to 8.0, more preferably 3.0 to 6.0 in mPa.s when used as flocculants. The microemulsions may further contain cross-linked or non-cross-linked, anionic or cationic polymers to improve drainage formation and retention in papermaking.

In the case of cross-linked polymers, a cross-linking agent content of above 4 molar parts per million, based on the monomeric units present in the polymer is preferred. Other preferred features of the present invention comprise compositions, as defined above, wherein the cross-linking agent content ranges from 4 to 6000 molar parts per million, preferably from 10 to 4000 molar parts per million and even more preferably from 50 to 4000 molar parts per million.

The preferred cross-linking agents comprise difunctional monomers selected from N,N'-methylenebis-acrylamide; N,N'-methylenebismethacrylamide; poly-ethyleneglycol diacrylate; polyethyleneglycol dimethacrylate; N-vinylacrylamide; glycidyl acrylate; divinylbenzene; acrolein; glyoxal; diepoxy compounds; epichlorohydrin; or mixtures of any of the foregoing. Especially preferred is N,N'-methylenebisacrylamide.

In preferred embodiments of the invention the aqueous phase comprises one or more ethylenically unsaturated monomers.

The preferred anionic monomers for use in the practice of the present invention are acrylic acid, methyl acrylic acid and their salts, 2-acrylamido-2-methyl propane sulfonate, sulfoethyl acrylate, sulfoethyl methyl acrylate, vinylsulfonic acid, styrene sulfonic acid and maleic acid. Especially preferred is acrylic acid.

A preferred feature of the present invention, comprises a process employing an aqueous solution comprising acrylic acid as the anionic monomer, methylenebisacrylamide as the cross-linking agent and acrylamide as the non-ionic monomer; an oil phase comprising a saturated hydrocarbon and a surfactant comprising a polyoxyethylene sorbitan hexaoleate and a sorbitan sesquioleate sufficient to produce polymer phase droplets of less than about 750 nm in number average size diameter.

Polymerization may be effected by adding a polymerization initiator, such as sodium metabisulfite or tert-butyl hydroperoxide to the aqueous phase or oil phase; and adding a polymerization activator while adding the aqueous phase to the oil phase, or alternatively, by ultraviolet irradiation.

Also contemplated by the present invention is adding an effective amount of a chain-transfer agent to the aqueous solution, such as an alcohol; a mercaptan; a phosphite; a sulfite or a mixture of any of the fore-going. Further, the process of the present invention may also comprise a step for recovering the composition from the inverse microemulsion.

The present invention specifically provides a method for preparing an improved high solids polymer microemulsion at relatively low surfactant levels, or having smaller aqueous phase droplet sizes, comprising: (a) preparing an oil phase comprising: (i) at least one hydrocarbon; and (ii) an effective amount of a surfactant or mixture of surfactants to form a microemulsion upon the addition of an aqueous phase; (b) preparing an aqueous phase comprising: (i) at least one ethylenically unsaturated monomer (in an amount of at least about 27 percent, by weight, of the total weight of aqueous phase and oil phase when higher solids is the goal); (c) adding a portion of said aqueous phase (b) to said oil phase

(a) to form a microemulsion and polymerizing; and (d) adding another portion of said aqueous phase (b) to the product of step (c) to form a microemulsion and polymerizing; wherein, when high solids is the goal, the emulsifier to monomer ratio (E/M) after the final portion addition is below 0.30 and the micro-emulsion produced by said method has improved performance over a microemulsion formed from a method comprising a single addition of the same total amount of aqueous phase and, when smaller aqueous phase droplets is the goal, said droplets are smaller than those obtained by a method comprising a single addition of the same total amount of aqueous phase and the resultant polymer microemulsion has 1) a polymer solids content of less than 25%, by weight, based on the total weight of the aqueous and oil phases and 2) an emulsifier to monomer ratio (E/M) of less than 0.4.

The selection of the organic phase has a substantial effect on the minimum surfactant concentration necessary to obtain the inverse microemulsion. The organic phase may comprise a hydrocarbon or hydrocarbon mixture. Saturated hydrocarbons or mixtures thereof are the most suitable in order to obtain inexpensive formulations. Typically, the organic phase will comprise benzene, toluene, fuel oil, kerosene, odorless mineral spirits and mixtures of any of the foregoing.

The one or more surfactants are preferably selected in order to obtain an HLB (Hydrophilic Lipophilic Balance) value ranging from 8 to 11. Outside this range, inverse microemulsions are not usually obtained. In addition to the appropriate HLB value, the concentration of surfactant must also be adjusted, i.e., sufficient to form an inverse microemulsion. Too low a concentration of surfactant leads to inverse emulsions of the prior art and too high a concentration results in undue costs. Typical surfactants useful in the practice of this invention, in addition to those specifically discussed above, may be anionic, cationic or non-ionic
and may be selected from polyoxyethylene (20) sorbitan trioleate, polyoxyethylene sorbitol hexaoleate, sorbitan sesquioleate, sorbitan trioleate, sodium di-2-ethylhexylsulfosuccinate, oleamidopropyldimethylamine and sodium isostearyl-2-lactate.

The aqueous phase (ii) comprises an aqueous mixture of the monomers, and, optionally, the cross-linking agent. The aqueous monomer mixture may also comprise such conventional additives as are desired. For example, the mixture may contain chelating agents to remove polymerization inhibitors, pH adjusters, thermal and redox initiators such as peroxides, organic compounds and redox couples and other conventional additives.

Cationic monomers useful in the practice of this invention include diallyldimethylammonium chloride; acryloxyethyltrimethylammonium chloride; (meth)acrylates of dialkylaminoalkyl compounds, and salts and quaternaries thereof and, in particular, monomers of N,N-dialkylaminoalkyl(meth)acrylamides, and salts and quaternaries thereof, such as N,N-dimethylaminoethyl-acrylamides; (meth)acrylamidopropyltrimethylammonium chloride and the acid or quaternary salts of N,N-dimethylaminoethylacrylate. Other cationic monomers which may be used herein are of the following general formulae:

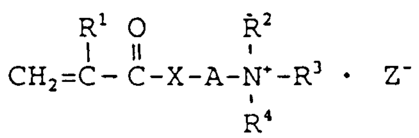
(I)

where $R^1$ is hydrogen or methyl, $R^2$ is hydrogen, or lower alkyl of $C_1$ to $C_4$, $R^3$ and $R^4$ are the same or different and independently represent hydrogen, alkyl of $C_1$ to $C_{12}$, aryl, or hydroxyethyl and $R^2$ and $R^3$ or $R^2$ and $R^4$ can combine to form a cyclic ring containing one or more hetero atoms, Z is the conjugate base of an acid, X is oxygen or $-NR^1$ wherein $R^1$ is as independently as defined above, and A is an alkylene group of $C_1$ to $C_{12}$; or

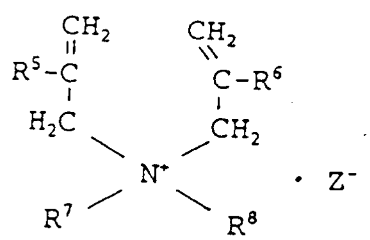
(II)

where $R^5$ and $R^6$ are the same or different and independently represent hydrogen or methyl, $R^7$ is hydrogen or alkyl of $C_1$ to $C_{12}$ and $R^8$ is hydrogen, alkyl of $C_1$ to $C_{12}$, benzyl or hydroxyethyl; and Z is as defined above.

Non-ionic monomers, suitable for use in the practice of this invention generally comprise acrylamide; methacrylamide; N-alkylacrylamides, such as N-methyl-acrylamide; N,N-dialkylacrylamides, such as N,N-dimethyl-acrylamide; methyl acrylate; methyl methacrylate; acrylonitrile; N-vinyl methylacetamide; N-vinyl methyl formamide; N-vinyl pyrrolidone and mixtures of any of the foregoing.

The present invention further contemplates copolymerizing ionic and nonionic monomers to produce ionic copolymers. Illustratively, acrylamide is copolymerized with an anionic monomer such as acrylic acid to prepare a retention aid for use in papermaking. Anionic copolymers useful in the practice of this invention comprise from 1 to 99 parts by weight of non-ionic monomer and from 99 to 1 part by weight of anionic monomer based on 100 parts by weight of the anionic and non-ionic monomers taken together; preferably from 30 to 99 parts by weight of non-ionic monomer and from 1 to 70 parts by weight of anionic monomer, same basis.

Alternatively, cationic copolymers can be prepared in similar manner.

Polymerization of the monomers optionally occurs in the presence of a polyfunctional cross-linking agent to form a cross-linked composition. The poly-functional cross-linking agent comprises molecules having either at least two double bonds, a double bond and a reactive group, or two reactive groups or mixtures thereof.

Polyfunctional branching agents containing at least one double bond and at least one reactive group include glycidyl acrylate; glycidyl methacrylate; acrolein; methylolacrylamide and mixtures thereof.

Polyfunctional branching agents containing at least two reactive groups include dialdehydes, such as glyoxal; diepoxy compounds; epichlorohydrin and mixtures thereof.

A variety of thermal and redox free-radical initiators including azo compounds, such as azobisiso-butyronitrile; peroxides, such as t-butyl peroxide; inorganic compounds, such as potassium persulfate and redox couples, such as ferrous ammonium sulfate ammonium/ persulfate, may also be added to the aqueous phase or to the oil phase.

The method of the present invention proceeds by incrementally adding the aqueous phase to the oil phase in at least two incremental additions and effecting polymerization after each addition of aqueous phase. Preferably there are n incremental addition/polymerization stages wherein n may range from 2 to 10, inclusive. The aqueous phase may be added in substantially equal parts such as halves, thirds, fourths, or the aqueous phase may be added in a dropwise manner to the oil phase.

It is further contemplated by the method of the present invention that the aqueous phase additions are added in non-equal parts, as long as there is sufficient monomer in each part to form a microemulsion with the oil phase and obtain the benefits of the present invention.

Preferably, the polymerization is effected by the addition of a polymerization activator, such as sulfur dioxide. Alternatively, polymerization may also be effected by photochemical irradiation processes, irradiation, or by ionizing radiation with a $^{60}Co$ source.

Recovery of the polymer from the microemulsion, if desired, may be effected by inversion of the resulting microemulsion by adding it to water which may contain a breaker surfactant. Optionally, the polymer may be recovered from the microemulsion by stripping or by adding the microemulsion to a solvent which precipitates the polymer, e.g., isopropanol, filtering off the resultant solids, drying and redispersing in water.

The anionic, nonionic, and polymeric products of this invention are useful in facilitating a wide range of solid-liquid separation operations. They may be used to dewater biologically treated suspensions, such as sewage and other municipal or industrial sludges; to drain cellulosic suspensions, such as those found in paper production, e.g. paper waste; and to settle and dewater various inorganic suspensions, e.g. refinery waste, coal waste. For example, a method of flocculation can comprise adding e.g. the cationic polymeric flocculants of the present invention to an aqueous dispersion of suspended solids, such as sewage sludge, in amounts ranging from 0.1 to 50,000 ppm of dispersion and then separating the flocculated suspended solids from the dispersion.

The anionic and cationic polymers of the present invention are especially useful as a retention aid for conventional papermaking stocks such as chemical pulps, mechanical pulps, thermomechanical pulps or recycled pulps.

The anionic polymers of the present invention are especially useful in oil recovery methods such as in drive fluids, manufacture of drilling muds, ground consolidation, prevention of inflows in producing oil wells and as completion or fracturation fluids. The solution viscosity of these anionic systems preferably ranges from 2 - 8 mPas when used in oil recovery applications.

The following examples illustrate the present invention.

**EXAMPLE 1**

### First Step

164.2 grams low odor paraffin oil, 27.6 grams of polyoxyethylene sorbitol hexaoleate (POSH) and 8.2 grams of sorbitan sesqui oleate (SS) whose HLB (hydrophilic lipophilic balance) is 8.7, are mixed under stirring.

62.55 grams of acrylamide, 26.81 grams of acrylic acid, 0.05 gram of ethylenediamine tetraacetate disodium salt dihydrate (EDTA), and 0.04 gram of t-butyl hydroperoxide (TBHP) are dissolved in a mixture of deionized water with 27.0 grams of about 29% ammonium hydroxide to adjust the pH to $8 \pm 0.1$. The acrylic acid/acrylamide ratio is 30/70. The solution is added to the oil/surfactant mixture. The A/O (aqueous/oil) ratio is 1/1 and the E/M (emulsifier/monomer) ratio is 0.4. After nitrogen purge at room temperature, the resultant microemulsion, milky in appearance, is placed under sulfur dioxide in nitrogen atmosphere. The resultant emulsion is stable and very clear.

**Second Step**

120 grams of an identical aqueous emulsion (comprising 37.53 grams of acrylamide; 16.09 grams of acrylic acid; 0.03 gram of EDTA; 0.02 gram of TBHP; 50.13 grams of water and 16.2 grams of ammonium hydroxide) is added to the above microemulsion. The A/O ratio is 1.7 and the E/M ratio is 0.25. After nitrogen purge, while cooling to room temperature, the resultant mixture (light cloudy yellow) is placed under a 0.1% sulfur dioxide in nitrogen atmosphere. The resultant emulsion is stable and clear.

**COMPARATIVE EXAMPLE 1A**

The procedure of Example 1 is repeated except that all of the aqueous phase is added and reacted in one step. The monomer emulsion is milky and the resultant polymer emulsion is stable and clear.

**EXAMPLE 2**

The procedure of Example 1 is repeated except that 0.07 gram and 0.04 gram of methylene bisacrylamide are added to the first and second aqueous phases, respectively. The crosslinker level is 800 ppm on monomer. The monomer emulsion is milky. The polymer emulsion is stable and clear.

**COMPARATIVE EXAMPLE 2A**

The procedure of Example 2 is repeated, except that the entire aqueous phase, with 0.11 gram dissolved methylene bisacrylamide, is added in one step. The monomer emulsion is milky. The resultant polymer emulsion is stable and clear.

**EXAMPLE 3**

**First Step**

168 grams of oil, 30.05 grams of POSH emulsifier and 1.95 g SS emulsifier whose combined HLB is 9.8 are mixed under stirring.

32 grams of acrylamide, 48 grams acrylic acid, 0.05 gram TBHP, and 0.32 gram EDTA are dissolved in 76.13 grams of deionized water with 43.5 grams of about 29% ammonium hydroxide to adjust the pH to 7.0 ± 0.1. The acrylic acid/acrylamide ratio is 60/40. The solution is added to the oil/surfactant mixture. The A/O and E/M ratios are 1/1 and 0.4, respectively. After the monomer emulsion (milky) is purged with nitrogen at room temperature, the emulsion is placed under 0.1% sulfur dioxide in nitrogen atmosphere.

**Second Step**

24.77 grams of acrylamide, 37.15 grams of acrylic acid, 0.04 gram of TBHP, and 0.25 gram of EDTA are dissolved in 20.79 grams of deionized water with 37.0 grams of about 29% ammonium hydroxide to adjust the pH to 7.0 ± 0.1. The solution is added to the above emulsion. The A/O and E/M ratio is 1.6 and 0.21, respectively. After the emulsion is purged with nitrogen and cooled to room temperature, it is placed under a 0.1% sulfur dioxide in nitrogen atmosphere. The polymer emulsion is stable and clear.

**COMPARATIVE EXAMPLE 3A**

The procedure of Example 3 is followed except that the aqueous phase is added and reacted in one step.

**EXAMPLE 4**

**First Step**

168 grams of oil, 30.05 grams of POSH surfactant and 1.95 g SS surfactant whose combined HLB is 9.8 are mixed under stirring.

35.77 grams of acrylamide, 53.88 grams acrylic acid, 1.79 grams of MBA, 0.05 gram TBHP, and 0.36 gram EDTA are dissolved in 60.76 grams of deionized water with 49 grams of about 29% ammonium hydroxide to adjust the pH to 7.0 ± 0.1. The acrylic acid/acrylamide ratio is 60/40. The crosslinker level is 2000 ppm on monomer. The solution is added to the oil/surfactant mixture. The A/O and E/M ratios are 1/1 and 0.36, respectively. After the monomer emulsion

(translucent) is purged with nitrogen at room temperature, the emulsion is placed under 0.1% sulfur dioxide in nitrogen atmosphere.

**Second Step**

120.0 grams of aqueous solution identical to the aqueous solution above (21.46 grams of acrylamide, 32.33 grams of acrylic acid, 0.107 gram of MBA, 0.03 gram of TBHP, 0.22 gram of EDTA, 36.46 grams of deionized water, and 29.4 grams of about 29% ammonium hydroxide) is added to the above emulsion. The A/O and E/M ratio is 1.7 and 0.21, respectively. After purging while cooling to room temperature, the resulting mixture (lightly clouded) is placed under a 0.1% sulfur dioxide in nitrogen atmosphere. The resultant polymer emulsion is stable and clear.

**COMPARATIVE EXAMPLE 4A**

The procedure of Example 4 is followed except that the aqueous phase is added and reacted in one step.

Table 1 below depicts in tabular form the results of testing of the materials of Examples 1-4 and Comparative Examples 1A-4A. Polymer phase droplet size is measured by two means.

TEM refers to a Philips 420T analytical transmission electron microscope; Gatan Model 626 TV image pick-up system for 3.1.1; Hitachi VT-S730 S-VHS videocassette recorder. The samples are diluted to 0.05-0.5%. For each sample the distribution and surface volume are generated.

QELS refers to a Nicomp Model HN5-90 Laser Scattering Spectrophotometer; Nicomp Autocorrelator Model Tc100; Spectra-Physics Argon Ion Laser Model 164. The samples are diluted. A minimum of 10,000 counts are generated. An average size is generated from two different channel widths of 1.7 and 2.0. Hydrodynamic radius of suspended colloids is measured.

Viscosity is measured on a Brookfield Viscometer Model LV. Samples are diluted to 0.200%. One measurement is made. Viscometer senses torque required to rotate a spindle in a liquid.

Drainage is measured in Britt CF Dynamic Drainage Jar packed with alum, and varying ratios of retention aid to polymer.

**TABLE 1**

| EXAMPLE | 1* | 1 | 1A** | 2* | 2 | 2A** | 3* | 3 | 3A** | 4* | 4 | 4A** |
|---|---|---|---|---|---|---|---|---|---|---|---|---|
| **Composition, grams** | | | | | | | | | | | | |
| Oil[a] | 164.2 | 164.2 | 164.2 | 164.2 | 164.2 | 164.2 | 168.0 | 168.0 | 168.0 | 168.0 | 168.0 | 168.0 |
| SS[b] | 8.2 | 8.2 | 8.2 | 8.2 | 8.2 | 8.2 | 1.95 | 1.95 | 1.95 | 1.95 | 1.95 | 1.95 |
| POSH[c] | 27.6 | 27.6 | 27.6 | 27.6 | 27.6 | 27.6 | 30.05 | 3.05 | 30.05 | 30.05 | 30.05 | 30.05 |
| Acrylamide[d] | 62.55 | 100.08 | 100.08 | 62.55 | 100.08 | 100.08 | 32.0 | 56.77 | 56.77 | 35.77 | 57.23 | 57.23 |
| Water | 83.55 | 133.68 | 133.68 | 83.55 | 133.68 | 133.68 | 76.13 | 96.92 | 96.92 | 60.76 | 97.22 | 97.22 |
| Acrylic Acid | 26.81 | 42.90 | 42.90 | 26.81 | 42.90 | 42.90 | 48.0 | 85.15 | 85.15 | 53.88 | 86.21 | 86.21 |
| Ammonium Hydroxide | 27.0 | 43.2 | 43.2 | 27.0 | 43.2 | 43.2 | 43.5 | 80.5 | 80.5 | 49.0 | 78.4 | 78.4 |
| MBA[e] | -- | -- | -- | 0.07 | 0.11 | 0.11 | -- | -- | -- | 1.79 | 1.90 | 1.90 |
| TBHP[f] | 0.04 | 0.06 | 0.06 | 0.04 | 0.06 | 0.06 | 0.05 | 0.09 | 0.09 | 0.05 | 0.08 | 0.08 |
| EDTA[g] | 0.05 | 0.08 | 0.08 | 0.05 | 0.08 | 0.08 | 0.32 | 0.57 | 0.57 | 0.36 | 0.58 | 0.58 |
| E/M ratio | 0.40 | 0.25 | 0.25 | 0.40 | 0.25 | 0.25 | 0.40 | 0.23 | 0.23 | 0.36 | 0.22 | 0.22 |
| Solids content, % | 22.3 | 27.5 | 27.5 | 22.3 | 27.5 | 27.5 | 20.0 | 27.3 | 27.3 | 22.3 | 27.5 | 27.5 |
| **Properties** | | | | | | | | | | | | |
| Droplet Size - TEM[h] | 47 | 60 | 71 | 48 | 57 | 70 | 50 | 61 | 94 | 54 | 62 | 70 |
| Droplet Size - QELS[i] | 127 | 144 | 170 | 112 | 123 | 167 | 119 | 124 | 169 | 128 | 140 | 166 |
| Viscosity[j], 0.2% | | | | | | | | | | | | |
| Bulk | 239 | 283 | 485 | 141 | 182 | 129 | 629 | 745 | 708 | 50 | 52 | 51 |
| Standard | 5.7 | 5.3 | 12.4 | 1.6 | 1.7 | 1.9 | 6.1 | 5.2 | 5.7 | 1.4 | 1.5 | 1.4 |
| Drainage[k], secs | | | | | | | | | | | | |
| 0.013 | 88 | 89 | -- | 81 | 90 | -- | 62 | 58 | 61 | 77 | 90 | 109 |
| 0.025 | 80 | 80 | -- | 59 | 60 | -- | 56 | 52 | 57 | 66 | 63 | 85 |

* = Conditions after first addition of aqueous phase
** = Comparative example
a = Low odor paraffin oil
b = Sorbitan Sesquioleate
c = Polyethylene (40) sorbitol hexaoleate
d = 50% Aqueous solution
e = Methylenebisacrylamide
f = 70% Aqueous t-butyl hydroperoxide
g = Ethylenediamine tetraacetate disodium salt dihydrate
h = Philips 420T analytical Transmission Electron Microscope
i = Nicomp Model HN5-90 Laser Scattering Spectrophotometer
j = Brookfield Viscometer Model LV
k = Britt CF Dynamic Drainage Jar, % dose, polymer

The improvements obtainable by the present invention are clearly exemplified by the data in Table 1 above. Smaller droplet sizes and improved drainage times are obtained by a two-step addition of the aqueous phase in side by side comparison with a one-step method using the same E/M ratio and solids content. Further, it can be seen that the two-step method has little or no significant effect on the viscosities of the final polymers.

**COMPARATIVE EXAMPLE 5A**

An oil phase is prepared by adding 90 grams of low odor paraffin oil to a suitable vessel. Surfactants, 0.61 g of sorbitan sesquioleate (SS) and 9.39 grams of polyoxyethylene sorbitol hexaoleate (POSH) are then added to the oil. The mixture is stirred until homogeneous.

The aqueous phase is then prepared by cooling a solution of 31.74 grams of 50% aqueous solution acrylamide and 30.79 grams of deionized water. Then 24.13 grams of acrylic acid are slowly added followed by the addition of 12.8 grams of sodium hydroxide. Next, 0.08 gram of methylenebisacrylamide, 0.40 gram of t-butyl hydroperoxide (70% aqueous) and 0.06 gram of pentasodium diethylenetriamine pentaacetate (40% solution) are added. The pH is adjusted to $7.0 \pm 0.1$ using sodium hydroxide.

The aqueous phase is then slowly added to the oil phase with agitation. The vessel is sparged with nitrogen for 15 minutes. Sulfur dioxide is generated by passing nitrogen through an aqueous solution of sodium metabisulfite (0.5%). The resulting stream is bubbled through the emulsion during monomer addition.

The aqueous phase/oil phase ratio (A/O) is 1/1 and the emulsifier/monomer ratio (E/M) is 0.25. The monomer emulsion is milky in appearance and the polymer emulsion is very clear and stable. The polymer solids is 20%.

Polymer phase droplet size distributions are obtained with a Nicomp Model HN5-90 Laser Scattering Spectrophotometer, a Nicomp Autocorrelator Model TC 100, using a Cu Radiation PS2 5mW Helium-Neon Laser.

Drainage is tested by the Britt-Jar Method using a Britt CF Dynamic Drainage Jar packed with alum and varying ratios of retention aid and polymer.

**EXAMPLE 5**

The oil phase and aqueous phases are prepared as set forth in Comparative Example 5A.

However, the aqueous phase is added to the oil phase in 3 equal parts by the following procedure. One third of the aqueous phase is added to form a hazy emulsion, the reaction is sparged with nitrogen, and $SO_2$ is bubbled through the mixture. The acrylic acid/acrylamide ratio is 60/40. The A/O ratio is 0.33 and the E/M ratio is 0.75. The polymerization is then quenched with oxygen by bubbling air through the emulsion for 1 minute. The polymer emulsion is stable and very clear. This sequence is then repeated two more times.

After the second step, the A/O is 0.67 and the E/M is 0.38. The resultant emulsion is stable and very clear.

After the third step, the A/O is 1/1 and the E/M is 0.25. The resultant emulsion is stable and very clear. The polymer solids content thereof is 20%.

**COMPARATIVE EXAMPLE 6A**

The procedure of Comparative Example 5A is repeated without the addition of methylenebisacrylamide. The resulting polymer emulsion (polymer solids=20%) is stable and very clear.

**EXAMPLE 6**

The procedure of Example 5 is repeated without the addition of methylenebisacrylamide. The resulting polymer emulsion is stable, very clear and has a polymer solids content of 20%.

**COMPARATIVE EXAMPLE 7A**

The procedure of Comparative Example 5A is repeated except that 0.112 gram of methylenebisacryl-amide is employed. The resulting emulsion is stable and very clear. Polymer solids content is again 20%.

**EXAMPLE 7**

The procedure of Example 5 is repeated except that 0.112 gram of methylenebisacrylamide is employed.

The resulting emulsion (polymer solids=20%) is stable and very clear.

**COMPARATIVE EXAMPLE 8A**

The procedure of Comparative Example 5A is repeated except that it contains 86 grams of oil, 0.86 gram of SS and 13.14 grams of POSH.

The A/O ratio is 1/1 and the E/M ratio is 0.35. The resulting emulsion is stable and very clear and has a polymer solids content of 20%.

**EXAMPLE 8**

The procedure of Example 5 is repeated except that it contains 86 grams of oil, 0.86 gram of SS and 13.14 grams of POSH.

The A/O ratio for the first step is 0.33 and the E/M ratio is 1.05. The A/O ratio for the second step is 0.67 and the E/M ratio is 0.58. The A/O ratio for the third step is 1/1 and the E/M ratio is 0.35.

The resulting emulsion is stable and very clear. Its polymer solids content is 20%.

**COMPARATIVE EXAMPLE 9A**

The procedure of Comparative Example 5A is followed except that it contains 84 grams of oil, 0.98 gram of SS and 15.02 grams of POSH. The A/O ratio is 1/1 and the E/M ratio is 0.4. The resulting emulsion is stable and very clear, with a polymer solids content of 20%.

**EXAMPLE 9**

The procedure of Example 5 is followed except that it contains 84 grams of oil, 0.98 gram of SS and 15.02 grams of POSH.

The A/O ratio for the first step is 0.33 and the E/M ratio is 1.2. The A/O ratio for the second step is 0.67 and the E/M ratio is 0.8. The A/O ratio for the third step is 1/1 and the E/M ratio is 0.4.

The resulting emulsion is stable and very clear, having a polymer solids content of 20%.

**COMPARATIVE EXAMPLE 10A**

The procedure of Comparative Example 9A is followed except that the aqueous phase comprises 16.09 grams of acrylic acid, 21.16 grams of acrylamide, 8.53 grams of sodium hydroxide, 0.053 gram of methylenebis-acrylamide, 0.27 gram of t-butylhydroperoxide, 0.04 gram of sodium diethylenetriamine pentaacetate, and 20.53 grams of water.

The A/O ratio is 1/1 and the E/M ratio is 0.6. The resulting emulsion is stable and very clear. The polymer solids content is 13.3%.

**COMPARATIVE EXAMPLE 10B**

The components of Comparative Example 10A are employed. However, the polymerization is effected by adding the aqueous phase in two equal parts by the following procedure. One-half of the aqueous monomer phase is added to the oil phase to form a hazy monomer emulsion and the vessel is sparged with nitrogen and $SO_2$ is bubbled through the reaction mixture. The polymerization is quenched with oxygen by bubbling air for 1 minute. The sequence is then repeated.

The A/O ratio after the first step is 0.5 and the E/M ratio is 1.2. The A/O ratio after the second step is 1/1 and the E/M ratio is 0.6.

The resulting emulsion is stable and very clear, with a polymer solids content of 13.3%.

**COMPARATIVE EXAMPLE 11A**

The procedure of Comparative Example 10A is repeated except that the oil phase comprises 90.0 grams of oil, 0.61 gram of SS and 9.39 grams of POSH.

The A/O ratio is 1/1 and the E/M ratio is 0.38. The resulting emulsion is stable and very clear. Its polymer solids content is 13.3%.

**EXAMPLE 11**

The procedure of Example 10A is repeated except that the oil phase comprises 90.0 grams of oil, 0.61 gram of SS and 9.39 grams of POSH.

The A/O ratio of the first step is 0.5 and the E/M ratio is 0.76. The A/O ratio of the second step is 1/1 and the E/M ratio is 0.38. The resulting emulsion is stable and very clear. The polymer solids content thereof is 13.3%.

The compositions of Examples 5-11 and Comparative Examples 5A-11A are tested for polymer phase droplet size and drainage rates. The results, along with compositional data, are set forth below in Table 2.

**TABLE 2**

| EXAMPLE | 5A* | 5 | 6A* | 6 | 7A* | 7 | 8A* | 8 | 9A* | 9 | 10A* | 10B* | 11A* | 11 |
|---|---|---|---|---|---|---|---|---|---|---|---|---|---|---|
| **Composition, grams** | | | | | | | | | | | | | | |
| Oil[a] | 90 | 90 | 90 | 90 | 90 | 90 | 86 | 86 | 84 | 84 | 84 | 84 | 90 | 90 |
| SS[b] | 0.61 | 0.61 | 0.61 | 0.61 | 0.61 | 0.61 | 0.86 | 0.86 | 0.98 | 0.98 | 0.98 | 0.98 | 0.61 | 0.61 |
| POSH[c] | 9.39 | 9.39 | 9.39 | 9.39 | 9.39 | 9.39 | 13.14 | 13.14 | 15.02 | 15.02 | 15.02 | 15.02 | 9.39 | 9.39 |
| Acrylamide[d] | 31.74 | 31.74 | 31.74 | 31.74 | 31.74 | 31.74 | 31.74 | 31.74 | 31.74 | 31.74 | 21.16 | 21.16 | 21.16 | 21.16 |
| Water | 30.79 | 30.79 | 30.79 | 30.79 | 30.79 | 30.79 | 30.79 | 30.79 | 30.79 | 30.79 | 20.53 | 20.53 | 20.53 | 20.53 |
| Acrylic Acid | 24.13 | 24.13 | 24.13 | 24.13 | 24.13 | 24.13 | 24.13 | 24.13 | 24.13 | 24.13 | 16.09 | 16.09 | 16.09 | 16.09 |
| Sodium Hydroxide | 12.8 | 12.8 | 12.8 | 12.8 | 12.8 | 12.8 | 12.8 | 12.8 | 12.8 | 12.8 | 8.53 | 8.53 | 8.53 | 8.53 |
| MBA[e] | 0.08 | 0.08 | 0.0 | 0.0 | 0.08 | 0.112 | 0.08 | 0.112 | 0.08 | 0.08 | 0.053 | 0.053 | 0.053 | 0.053 |
| TBHP[f] | 0.40 | 0.40 | 0.40 | 0.40 | 0.40 | 0.40 | 0.40 | 0.40 | 0.40 | 0.40 | 0.27 | 0.27 | 0.27 | 0.27 |
| DPTA[g] | 0.06 | 0.06 | 0.06 | 0.06 | 0.06 | 0.06 | 0.06 | 0.06 | 0.06 | 0.06 | 0.04 | 0.04 | 0.04 | 0.04 |
| Steps, # | 1 | 3 | 1 | 3 | 1 | 3 | 1 | 3 | 1 | 3 | 1 | 2 | 1 | 2 |
| Final E/M[h] | 0.25 | 0.25 | 0.25 | 0.25 | 0.25 | 0.25 | 0.35 | 0.35 | 0.4 | 0.4 | 0.6 | 0.6 | 0.38 | 0.38 |
| MBA[i], ppm | 2000 | 2000 | 0 | 0 | 2800 | 2800 | 2000 | 2000 | 2000 | 2000 | 2000 | 2000 | 2000 | 2000 |
| **Properties** | | | | | | | | | | | | | | |
| Droplet Size, nm | 157 | 135 | 152 | 128 | 141 | 137 | 129 | 122 | 113 | 110 | 109 | 114 | 127 | 119 |
| Drainage, sec | | | | | | | | | | | | | | |
| 0.013[j] | 56.9 | 47.7 | -- | -- | 61.9 | 59.6 | 57.2 | 57.2 | 57.0 | 55.8 | -- | -- | -- | -- |
| 0.015[j] | 51.8 | 46.5 | -- | -- | 47.9 | 45.7 | 49.2 | 49.2 | 54.9 | 46.0 | -- | -- | -- | -- |
| 0.025[j] | 43.5 | 40.9 | -- | -- | -- | -- | 44.0 | 42.8 | 43.3 | 42.5 | -- | -- | -- | -- |

* = Comparative example
a = Low odor paraffin oil
b = Sorbitan Sesquioleate
c = Polyethylene Sorbitol Hexaoleate
d = 50% Aqueous solution
e = Methylenebisacrylamide
f = 70% Aqueous t-butyl hydroperoxide
g = 40% Aqueous solution of pentasodium diethylenetriamine pentaacetate
h = Emulsifier to Monomer ratio of final microemulsion
i = Cross-linker level on monomer in parts per million
j = % dose, polymer

The improvements of the present invention can be seen from the data of Table 2. The droplet sizes of the polymer phases produced in accordance with the present invention, multi-step additions, are smaller and provide improved drainage. Note, from Examples 7-7A and 8-8A, that the level of cross-linker has little effect on polymer phase droplet

size.

As used herein, the terms "emulsifier to monomer ratio" or "(E/M)" is meant to refer to the total amount of monomer added during the preparation of the polymer microemulsion, i.e. the amount which is added in each individual stage of aqueous phase addition plus that which had been added previous to any such stage.

Many variations of the present invention will suggest themselves to those skilled in this art in light of the above-detailed description. Anionic monomers other than acrylic acid can be employed, as can cationic monomers and non-ionic monomers other than acrylamide. Polymerization can also be effected by UV-radiation. Chain-transfer agents may be optionally added to the monomer solution. All such obvious modifications are within the full intended scope of the appended claims.

## Claims

1. A method for preparing a water-in-oil polymeric microemulsion, the method comprising (i) preparing an oil phase comprising at least one hydrocarbon liquid and an effective amount of surfactant or mixture of surfactants; (ii) preparing an aqueous phase comprising at least one monomer which can be cationic, anionic or non-ionic, and optionally at least one cross-linking agent; and (iii) adding the aqueous phase in at least two portions to the oil phase and then effecting polymerization after the addition of each portion.

2. A method according to Claim 1, wherein said aqueous phase is added to said oil phase in n incremental stages with polymerization after each incremental addition, and wherein n ranges from 2 to 10.

3. A method according to Claim 1, wherein said incremental addition/polymerization stages are performed in dropwise increments.

4. A method according to any preceding claim, wherein said aqueous phase comprises one or more ethylenically unsaturated monomers.

5. A method of preparing a water-in-oil polymer microemulsion of high solids or having small aqueous phase droplet sizes comprising:

   (a) preparing an oil phase comprising:

      (i) at least one hydrocarbon; and

      (ii) an effective amount of a surfactant or mixture of surfactants to form a microemulsion upon the addition of an aqueous phase;

   (b) preparing an aqueous phase comprising:

      (i) at least one ethylenically unsaturated monomer, in an amount of at least 27 percent by weight of the total weight of aqueous phase and oil phase if high solids are the goal;

   (c) adding a portion of said aqueous phase (b) to said oil phase (a) to form a microemulsion and polymerizing; and

   (d) adding another portion of said aqueous phase (b) to the product of step (c) to form a microemulsion and polymerizing;

   wherein the emulsifier to monomer ratio after the final portion addition is below 0.30 if high solids are the goal and the polymer microemulsion, if small droplets of aqueous phase are the goal, has polymer solids of less than 25% and an emulsifier to monomer ratio of less than 0.4 and the microemulsion produced by said higher solids method has improved performance over a microemulsion formed from a method comprising a single addition of the same total amount of aqueous phase and the aqueous polymer phase droplets produced by said smaller droplets method are smaller than those obtained by a method comprising a single addition of the same total amount of aqueous phase.

6. A method according to Claim 4 or Claim 5, wherein said aqueous phase comprises an anionic monomer selected from acrylic acid, methyl acrylic acid, 2-acrylamido-2-methyl propane sulfonate, sulfoethyl acrylate, sulfoethyl methyl acrylate, vinylsulfonic acid, styrene sulfonic acid and maleic acid.

7. A method according to Claim 4 or Claim 5, wherein said aqueous phase comprises a cationic monomer selected from diallyldimethylammonium chloride, acryloxyethyltrimethylammonium chloride, (meth)acrylates of dialkylaminoalkyl compounds, and salts and quaternaries thereof.

8. A method according to any one of Claims 4-7, wherein said aqueous phase comprises a non-ionic monomer selected from acrylamide, methacrylamide, N-alkylacrylamides, N,N-dialkylacrylamides, methyl(meth)acrylate, acrylonitrile, N-vinyl methacetamide, N-vinyl methyl formamide and N-vinyl pyrrolidone.

9. A method according to Claim 8, wherein said aqueous phase comprises a mixture of acrylic acid and acrylamide.

10. A method according to any preceding claim, wherein said aqueous phase comprises a cross-linking monomer.

11. A method according to Claim 10, wherein said cross-linking monomer is selected from N,N'-methylenebisacrylamide, N,N'-methylenebismethacrylamide, poly-ethyleneglycol diacrylate, polyethyleneglycol dimethacrylate, N-vinylacrylamide, glycidyl acrylate, divinylbenzene, acrolein, glyoxal, diepoxy compounds and epichlorohydrin.

12. A method according to Claim 11, wherein said aqueous phase is an aqueous solution comprising acrylic acid as an anionic monomer, methylenebisacrylamide as cross-linking agent and acrylamide as a non-ionic monomer; and wherein said oil phase comprises a saturated hydrocarbon and a surfactant comprising a polyoxyethylene sorbitan hexaoleate and a sorbitan sesquioleate sufficient to produce polymer phase droplets of less than 750 nm in number average size diameter.

**Patentansprüche**

1. Verfahren zur Herstellung einer Wasser-in-Öl-Polymermikroemulsion wobei das Verfahren folgendes umfaßt: (i) Herstellung einer Ölphase mit mindestens einer Kohlenwasserstoffflüssigkeit und einer wirksamen Menge an oberflächenaktivem Stoff oder einer Mischung aus oberflächenaktiven Stoffen; (ii) Herstellung einer wäßrigen Phase mit mindestens einem Monomer, welches kationisch, anionisch oder nichtionisch sein kann, und gegebenenfalls mindestens einem Vernetzungsmittel; und (iii) Zugabe der wäßrigen Phase in mindestens zwei Teilen zur Ölphase und anschließend Durchführung einer Polymerisation nach Zugabe jedes Teils.

2. Verfahren gemäß Anspruch 1, bei dem die wäßrige Phase der Ölphase in n-inkrementalen Stufen zugegeben wird, wobei nach jeder inkrementalen Zugabe eine Polymerisation erfolgt, und wobei n im Bereich von 2 bis 10 liegt.

3. Verfahren gemäß Anspruch 1, bei dem die inkrementalen Zugabe-/Polymerisationsstufen in tropfenweisen Inkrementen erfolgen.

4. Verfahren gemäß einem der vorhergehenden Ansprüche, bei dem die wäßrige Phase eine oder mehrere ethylenisch ungesättigte Monomere umfaßt.

5. Verfahren zur Herstellung einer Wasser-in-Öl-Polymermikroemulsion mit hohem Feststoffgehalt oder mit einer wäßrigen Phase mit kleinen Tröpfchengrößen, das folgendes umfaßt:

(a) Herstellung einer Ölphase mit:

(i) mindestens einem Kohlenwasserstoff; und
(ii) einer wirksamen Menge an oberflächenaktivem Stoff oder einer Mischung aus oberflächenaktiven Stoffen zur Bildung einer Mikroemulsion bei Zugabe einer wäßrigen Phase;

(b) Herstellung einer wäßrigen Phase mit:

(i) mindestens einem ethylenisch ungesättigten Monomer in einer Menge von mindestens 27 Gew.% des Gesamtgewichts an wäßriger Phase und Ölphase, falls ein hoher Feststoffgehalt das Ziel ist;

(c) Zugabe eines Teils der wäßrigen Phase (b) zu der Ölphase (a) zur Bildung einer Mikroemulsion und Polymerisation

(d) Zugabe eines weiteren Teils der wäßrigen Phase (b) zum Produkt von Schritt (c) zur Bildung einer Mikroemulsion und Polymerisation;

wobei das Verhältnis Emulgator zu Monomer nach der Endteilzugabe unter 0,30 liegt, falls ein hoher Feststoffgehalt das Ziel ist, und die Polymermikroemulsion, falls kleine Tröpfchen der wäßrigen Phase das Ziel sind, Polymerfeststoffe von weniger als 25 % und ein Verhältnis Emulgator zu Monomer von weniger als 0,4 aufweist, und die Mikroemulsion, welche durch das Verfahren des höheren Feststoffgehalts hergestellt wird, eine verbesserte Wirkung im Vergleich zu einer Mikroemulsion aufweist, welche durch ein Verfahren mit einer einzigen Zugabe derselben Gesamtmenge an wäßriger Phase gebildet wird, und die Tröpfchen der wäßrigen Polymerphase, welche durch das Verfahren der kleineren Tröpfchen hergestellt werden, kleiner sind als jene, welche durch ein Verfahren mit einer einzigen Zugabe derselben Gesamtmenge an wäßriger Phase erhalten werden.

**6.** Verfahren gemäß Anspruch 4 oder Anspruch 5, bei dem die wäßrige Phase ein anionisches Monomer ausgewählt aus Acrylsäure, Methylacrylsäure, 2-Acrylamid-2-Methylpropansulfonat, Sulfoethylacrylat, Sulfoethylmethylacrylat, Vinylsulfonsäure, Styrolsulfonsäure und Maleinsäure aufweist.

**7.** Verfahren gemäß Anspruch 4 oder Anspruch 5, bei dem die wäßrige Phase ein kationisches Monomer ausgewählt aus Diallyldimethylammoniumchlorid, Acryloxyethyltrimethylammoniumchlorid, (Meth)acrylaten von Dialkylaminoalkylverbindungen und Salzen und quaternären Verbindungen hiervon aufweist.

**8.** Verfahren gemäß einem der Ansprüche 4 - 7, bei dem die wäßrige Phase ein nichtionisches Monomer ausgewählt aus Acrylamid, Methacrylamid, N-Alkylacrylamiden, N,N-Dialkylacrylamiden, Methyl(meth)acrylat, Acrylnitril, N-Vinylmethacetamid, N-Vinylmethylformamid und N-Vinylpyrrolidon aufweist.

**9.** Verfahren gemäß Anspruch 8, bei dem die wäßrige Phase eine Mischung aus Acrylsäure und Acrylamid aufweist.

**10.** Verfahren gemäß einem der vorhergehenden Ansprüche, bei dem die wäßrige Phase ein Vernetzungsmonomer aufweist.

**11.** Verfahren gemäß Anspruch 10, bei dem das Vernetzungsmonomer aus N,N'-Methylenbisacrylamid, N,N'-Methylenbismethacrylamid, Polyethylenglycoldiacrylat, Polyethylenglycoldimethacrylat, N-Vinylacrylamid, Glycidylacrylat, Divinylbenzol, Acrolein, Glyoxal, Diepoxyverbindungen und Epichlorhydrin ausgewählt ist.

**12.** Verfahren gemäß Anspruch 11, bei dem die wäßrige Phase eine wäßrige Lösung mit Acrylsäure als anionisches Monomer, Methylenbisacrylamid als Vernetzungsmittel und Acrylamid als nichtionisches Monomer ist; und wobei die Ölphase einen gesättigten Kohlenwasserstoff und einen oberflächenaktiven Stoff, umfassend ein Polyoxyethylensorbitanhexaoleat und ein Sorbitansesquioleat, ausreichend zur Herstellung von Polymerphasentröpfchen von weniger als 750 nm im Zahlendurchschnittsgrößendurchmesser, aufweist.

## Revendications

**1.** Un procédé pour préparer une microémulsion de polymère du type eau dans l'huile, le procédé comprenant (i) la préparation d'une phase huileuse comprenant au moins un hydrocarbure liquide et une quantité efficace d'un agent tensio-actif ou d'un mélange d'agents tensio-actifs ; (ii) la préparation d'une phase aqueuse comprenant au moins un monomère qui peut être cationique, anionique ou non ionique, et facultativement au moins un agent de réticulation ; et (iii) l'addition de la phase aqueuse, en au moins deux portions, à la phase huileuse, puis l'exécution d'une polymérisation après l'addition de chaque portion.

**2.** Un procédé selon la revendication 1, dans lequel ladite phase aqueuse est ajoutée à ladite phase huileuse en n étapes successives avec polymérisation après chaque addition successive, et dans lequel la valeur de n est de 2 à 10.

**3.** Un procédé selon la revendication 1, dans lequel lesdites étapes successives d'addition/polymérisation sont effectuées par incréments goutte à goutte.

**4.** Un procédé selon l'une quelconque des revendications précédentes, dans lequel ladite phase aqueuse comprend un ou plusieurs monomères éthyléniquement insaturés.

**5.** Un procédé de préparation d'une microémulsion de polymère du type eau dans l'huile à haute teneur en matière sèche ou ayant de petites tailles de gouttelettes de phase aqueuse, comprenant :

(a) la préparation d'une phase huileuse comprenant :

(i) au moins un hydrocarbure ; et

(ii) une quantité efficace d'un agent tensio-actif ou d'un mélange d'agents tensio-actifs pour former une microémulsion par l'addition d'une phase aqueuse ;

(b) la préparation d'une phase aqueuse comprenant :

(i) au moins un monomère éthyléniquement insaturé, en une quantité d'au moins environ 27 pour cent en poids du poids total de la phase aqueuse et de la phase huileuse si l'objectif est d'obtenir une haute teneur en matière sèche ;

(c) l'addition d'une portion de ladite phase aqueuse (b) à ladite phase huileuse (a) pour former une microémulsion et l'exécution d'une polymérisation ; et

(d) l'addition d'une autre portion de ladite phase aqueuse (b) au produit de l'étape (c) pour former une microémulsion et l'exécution d'une polymérisation ;

dans lequel, si l'objectif est d'obtenir une haute teneur en matière sèche, le rapport de l'émulsifiant au monomère après l'addition de la dernière portion est inférieur à 0,30 et, si l'objectif est d'obtenir de petites gouttelettes de phase aqueuse, la microémulsion de polymère a une teneur en matière sèche polymère inférieure à 25 % et un rapport de l'émulsifiant au monomère inférieur à 0,4, et la microémulsion produite par ledit procédé pour une plus haute teneur en matière sèche a une efficacité améliorée comparativement à une microémulsion formée par un procédé comprenant une seule addition de la même quantité totale de phase aqueuse, et les gouttelettes de phase aqueuse de polymère produites par ledit procédé pour des gouttelettes plus petites sont plus petites que celles obtenues par un procédé comprenant une seule addition de la même quantité totale de phase aqueuse.

**6.** Un procédé selon la revendication 4 ou la revendication 5, dans lequel ladite phase aqueuse comprend un monomère anionique choisi parmi l'acide acrylique, l'acide méthacrylique, un 2-acrylamido-2-méthylpropanesulfonate, unsulfoéthylacrylate, unsulfoéthylméthacrylate, l'acide vinylsulfonique, l'acide styrènesulfonique et l'acide maléique.

**7.** Un procédé selon la revendication 4 ou la revendication 5, dans lequel ladite phase aqueuse comprend un monomère cationique choisi parmi le chlorure de diallyldiméthylammonium, le chlorure d'acryloxyéthyltriméthylammonium, les (méth)acrylates de dialkylaminoalkyle, et leurs sels et dérivés quaternaires.

**8.** Un procédé selon l'une quelconque des revendications 4 à 7, dans lequel ladite phase aqueuse comprend un monomère non ionique choisi parmi l'acrylamide, le méthacrylamide, les N-alkylacrylamides, les N,N-dialkylacrylamides, le (méth)acrylate de méthyle, l'acrylonitrile, le N-vinylméthylacétamide, le N-vinylméthylformamide et la N-vinylpyrrolidone.

**9.** Un procédé selon la revendication 8, dans lequel ladite phase aqueuse comprend un mélange d'acide acrylique et d'acrylamide.

**10.** Un procédé selon l'une quelconque des revendications précédentes, dans lequel ladite phase aqueuse comprend un monomère de réticulation.

**11.** Un procédé selon la revendication 10, dans lequel ledit monomère de réticulation est choisi parmi le N,N'-méthylènebisacrylamide, le N,N'-méthylènebisméthacrylamide, un diacrylate de polyéthylène-glycol, un diméthacrylate de polyéthylène-glycol, le N-vinylacrylamide, l'acrylate de glycidyle, le divinylbenzène, l'acroléine, le glyoxal, les diépoxydes et l'épichlorhydrine.

**12.** Un procédé selon la revendication 11, dans lequel ladite phase aqueuse est une solution aqueuse comprenant de l'acide acrylique comme monomère anionique, du méthylènebisacrylamide comme agent de réticulation et de l'acrylamide comme monomère non ionique ; et dans lequel ladite phase huileuse comprend un hydrocarbure saturé et un agent tensioactif comprenant un hexaoléate de polyoxyéthylène-sorbitanne et un sesquioléate de sorbitanne en quantité suffisante pour produire des gouttelettes de phase polymère ayant un diamètre moyen en nombre inférieur à 750 nm.